# FASCICULE DE BREVET EUROPEEN

(11) **EP 3 827 144 B1**
(45) Date de publication et mention de la délivrance du brevet: **05.03.2025**
(21) Numéro de dépôt: 19753160.1
(22) Date de dépôt: 15.07.2019
(51) Int. Cl.: E04F 13/00

(54) **TEXTILE ENDUIT IMPER-RESPIRANT ET SON PROCÉDÉ DE FABRICATION**
ATMUNGSAKTIVES BESCHICHTESTES TEXTIL UND VERFAHREN ZU DESSEN HERSTELLUNG
BREATHABLE COATED TEXTILE AND METHOD OF MANUFACTURING THEREOF

(30) Priorité: 25.07.2018 FR 1856923
(43) Date de publication de la demande: 02.06.2021
(73) Titulaire: Serge Ferrari SAS, 38110 Saint Jean de Soudain (FR)
(72) Inventeur: ROJON, Jonathan, 8192 GLATTFELDEN (CH); MERENNA, Guilhem, 8006 ZÜRICH (CH); BRETON, Julia, 8050 ZÜRICH (CH)
(74) Mandataire: Cabinet Laurent & Charras
(86) Numéro de dépôt international: PCT/FR2019/051771
(87) Numéro de publication internationale: WO 2020/021181

(56) Documents cités:
- US-A- 4 994 317
- US-A1- 2008 020 190
- US-A1- 2011 308 181
- WYPYCH G ED - WYPYCH G: "Handbook of Fillers", 1 January 1999, HANDBOOK OF FILLERS, CHEMTEC PUBLISHING, TORONTO, ONTARIO, CANADA, PAGE(S) 246, I - IIED.2, ISBN: 978-1-895198-19-5, XP002971967

## Description

### DOMAINE DE L'INVENTION

La présente invention concerne le domaine des membranes imper-respirantes notamment pour revêtir des façades de bâtiments.

Plus précisément, la présente invention concerne des membranes à base de fibres de verre présentant une excellente résistance au feu et un équilibre étanchéité/imper-respirabilité adéquat pour une utilisation en tant que revêtement de façade d'un bâtiment.

### ETAT ANTERIEUR DE LA TECHNIQUE

Les membranes destinées à être rapportées sur une façade d'un bâtiment doivent être étanches à l'eau liquide tout en garantissant une certaine respirabilité. Elles doivent également présenter une résistance suffisante aux rayons ultra-violets (UV) et à la température, car elles sont directement exposées au soleil, et aux intempéries comme la pluie. Les membranes disponibles sur le marché sont composées d'un support textile enduit par un revêtement qui permet de combiner ces propriétés d'étanchéité et de respirabilité. En particulier, l'eau liquide ne peut pas traverser la membrane tandis que la vapeur d'eau le peut. Cette propriété garantit que l'intérieur du bâtiment est protégé de l'eau en empêchant celle-ci de pénétrer mais en permettant à la vapeur de s'évacuer ce qui évite en particulier les phénomènes de condensation de l'eau à l'intérieur du bâtiment.

Actuellement, les membranes imper-respirantes utilisées pour revêtir des façades de bâtiments comprennent, pour la plupart, un support sous forme d'une nappe en non tissé. Généralement, cette nappe est à base de fibres de polyester, de polypropylène, de verre ou encore d'un mélange de fibres de verre et de fibres de polyester. Parfois, des membranes actuellement sur le marché intègrent également une armature tissée.

Les fibres de verre sont toutefois très peu utilisées dans cette application. En effet, les non tissés à base de fibres de verre présentent une résistance mécanique à la pliure souvent trop faible et les textiles de verre sont plus onéreux que les textiles à base de polyester ou de polypropylène. Par ailleurs, l'homme du métier n'est pas incité à intégrer des fibres de verre dans une membrane imper-respirante destinée à être rapportée sur une façade d'un bâtiment en raison du risque de rupture si les fibres sont pliées et la faible résistance au vieillissement hydrolytique qu'elles présentent.

De manière générale, les revêtements sont à base de polyuréthane (PU), de polyamide ou d'acrylique. On connait également des revêtements à base de mousse de polychlorure de vinyle (PVC) mais ceux-ci sont utilisés uniquement en sous toiture car ils ne présentent ni une respirabilité ni une résistance suffisante aux UV et à la température pour une utilisation sur une façade d'un bâtiment.

Parmi les revêtements à base d'acrylique, on peut citer les dispersions acryliques, homopolymère ou copolymère, connus pour leur stabilité aux UV. Afin d'obtenir une respirabilité suffisante, ces dispersions sont généralement « moussées » mécaniquement.

Ces revêtements peuvent être rendus ignifuges en ajoutant des composés inorganiques ignifugeants tels que l'alumine trihydratée, l'hydroxyde de magnésium, les silices, les zéolites, l'hydroxystannate de zinc, l'hydroxystannate de calcium, le trioxyde d'antimoine (Sb₂O₃), le carbonate de calcium (CaCO₃) ainsi que des pigments inorganiques et charges métalliques telles que notamment l'aluminium ou le cuivre. Cependant, la présence de ces composés diminue l'étanchéité à l'eau.

Les revêtements à base de PU se présentent de manière générale sous forme extrudable en voie fondue ou sous forme de dispersion aqueuse. Ces revêtements à base de PU présentent l'avantage d'être souples à basse température. En revanche, il est difficile de les rendre résistants aux UV et de les rendre ignifuges quand ils se présentent sous une forme extrudable en voie fondue. Par ailleurs, les revêtements à base de PU présentent de mauvaises propriétés intrinsèques d'étanchéité, et vieillissent mal en température (perte de souplesse - friabilité) ce qui dégrade d'autant plus l'étanchéité. La demande de brevet US 2011/308181 divulgue un textile, perméable à la vapeur et imperméable aux liquides, destiné à être positionné sur une façade extérieure d'une maison comprenant un revêtement à base de polyuréthane.

De manière générale, ces membranes présentent un pouvoir calorifique supérieur (PCS) au-delà de 20MJ/kg, et typiquement de l'ordre de 25 MJ/kg. Suite à un incendie tragique d'une tour d'habitation en Angleterre, les législations, notamment en Europe et en Suisse sont en cours de modification, en particulier pour les immeubles mesurant plus de 11 m de hauteur. Les exigences en termes de résistance au feu vont prochainement être augmentées. En particulier, le PCS exigé des membranes devrait être inférieur à 4MJ/kg en Suisse et à 3 MJ/kg en Allemagne.

Le brevet US 4 994 317 propose de manière alternative un textile servant de barrière au feu présentant une couche de silicone, et un ignifugeant à base d'aluminium. Cependant, le PCS obtenu est trop élevé pour satisfaire à ces exigences.

Le brevet US 2008/0020190 propose un revêtement mural, flexible et imperméable à l'eau, constitué d'une structure textile de base, enduite sur une de ses faces d'une couche composée d'une matrice en silicone incorporant des particules de céramique. Un tel revêtement ne semble pas présenter de propriété d'imper-respirabilité, qui sont nécessaires pour éviter tout problème de condensation à l'intérieur des bâtiments.

Ainsi, il existe un besoin de développer des membranes destinées à être rapportées sur une façade d'un bâtiment présentant un PCS répondant aux législations à venir.

### EXPOSE DE L'INVENTION

Pour répondre à ce besoin, la Demanderesse a mis au point une membrane à base de fibres de verre, enduite sur une face d'un revêtement à base de silicone contenant un composé inorganique ignifugeant.

Ainsi, l'invention concerne un textile enduit selon la revendication 1. Des modes de réalisation préférentiels sont définis dans les revendications dépendantes.

On entend par « tranche » la surface sensiblement perpendiculaire aux faces endroit et envers de la nappe, formant le contour de cette dernière. Avantageusement, la tranche de la nappe de fibres de verre est recouverte par la couche d'enduction, de manière à protéger cette nappe textile de l'humidité extérieure.

On entend par « apte à être collée sur un support » la capacité d'être solidarisée avec un autre matériau par l'addition d'une matière intermédiaire.

En pratique, la face envers peut par exemple présenter une surface pouvant être apprêtée avec une colle en vue de sa solidarisation avec un mur, ou une couche ou plaque de matériau de construction ou d'isolation.

L'invention concerne également un procédé selon la revendication 8 de fabrication du textile décrit ci-dessus comprenant au moins les étapes suivantes :
- obtention d'une nappe tissée ou non tissée à base de fibres de verre,
- enduction de ladite face endroit avec une composition à base de silicone comprenant entre 5% et 60% en poids d'au moins un composé inorganique ignifugeant.

L'invention concerne également l'utilisation du textile décrit ci-dessus comme revêtement d'une structure d'un bâtiment.

En d'autres termes, la Demanderesse a mis au point une membrane comprenant une nappe à base de fibres de verre revêtue d'une couche d'enduction de silicone, résistante au feu et qui combine de manière surprenante des résultats satisfaisant à la fois en termes d'étanchéité à l'eau, de respirabilité, et de PCS limité. En effet, un compromis est à trouver entre des propriétés apparemment contradictoires, car plus l'étanchéité à l'eau augmente, plus on dégrade les propriétés de résistance au feu et la respirabilité. L'invention présente aussi des avantages inattendus sur des aspects complémentaires que sont la stabilité en température et aux UV, ainsi qu'en résistance au pliage (ou « crease fold » en anglais).

Les avantages de la membrane selon l'invention sont une grande stabilité à la température, une excellente stabilité aux UV, une étanchéité à la pluie tout en présentant une bonne imper-respirabilité et ce en tant que matériau incombustible.

Conformément à l'invention, le textile comporte une nappe à base de fibres de verre. La nappe peut être tissée ou non tissée ou encore sous forme de grille et ladite face endroit et de préférence ladite tranche sont recouvertes avec une couche d'enduction à base de silicone comprenant au moins un composé inorganique ignifugeant. La nappe peut également comprendre des câbles d'acier.

L'épaisseur et le poids de ladite nappe et de ladite couche d'enduction ont une influence sur la résistance mécanique et la souplesse du textile enduit. Par ailleurs, l'épaisseur et le poids de ladite couche d'enduction ont une influence sur les propriétés d'étanchéité et d'imper-respirabilité du textile enduit. Le PCS augmente également avec le poids de la couche d'enduction. Ainsi, il est préférable de trouver un compromis entre résistance mécanique, souplesse, étanchéité, imper-respirabilité et PCS. En particulier, l'épaisseur de ladite couche d'enduction doit être suffisante pour garantir l'étanchéité, mais limitée pour permettre de conserver une imper-respirabilité suffisante.

Ainsi, la nappe présente avantageusement une épaisseur comprise entre 20 µm et 1 mm, de manière plus avantageuse entre 50 µm et 500 µm, et de manière encore plus avantageuse entre 100 µm et 300 µm.

Selon l'invention, la nappe présente un poids compris entre 20 g/m² et 500 g/m², et de manière encore plus avantageuse entre 100 g/m² et 300 g/m².

Ainsi, de manière avantageuse, la couche d'enduction à base de silicone a un poids compris entre 10 et 300 g/m².

Selon l'invention, la couche d'enduction à base de silicone présente une épaisseur comprise entre 5 et 150 µm et de manière encore plus avantageuse entre 50 et 100 µm.

La couche d'enduction peut être à base de nombreux types de silicone. De manière avantageuse, la couche d'enduction est à base de silicone choisi dans le groupe comprenant de façon générale les polysiloxanes et leurs copolymères, et notamment les polydiméthylsiloxanes, les polydiphenylsiloxanes, les oligosiloxanes, les polyaminosiloxanes, ou les polyvinylsiloxanes.

La couche d'enduction à base de silicone assure l'étanchéité aussi bien de la face endroit que de la tranche le cas échéant afin d'empêcher l'infiltration d'eau et de limiter les risques de moisissure de la nappe.

Dans certains cas, on peut prévoir que la face envers de la nappe à base de fibres de verre soit également recouverte d'une couche d'enduction, de manière à protéger cette face envers, et en particulier les crêtes de la nappe fibreuse tissée, de l'abrasion.

Dans ce cas, avantageusement en pratique, les couches d'enduction recouvrant les faces endroit et envers sont à base du même matériau, et il peut être préférable pour des questions de poids global que la couche d'enduction recouvrant la face envers ait une épaisseur inférieure à l'épaisseur de la couche d'enduction recouvrant la face endroit.

La propriété ignifugeante est apportée par un composé inorganique ignifugeant intégré à la couche d'enduction. L'efficacité d'un composé ignifugeant dépend de son environnement, de sa nature et de sa quantité.

Selon l'invention, ledit composé inorganique ignifugeant est choisi dans le groupe comprenant le trihydrate d'aluminium, l'hydroxyde de magnésium, les silices, le trioxyde d'antimoine (Sb₂O₃), le carbonate de calcium (CaCO₃) ainsi que des pigments inorganiques.

La quantité de composé inorganique ignifugeant est suffisante pour que le textile enduit présente un pouvoir calorifique supérieur inférieur ou égal à 3 MJ/kg.

Le PCS est mesuré selon la norme EN ISO 1716 avec la méthode dite « bombe calorimétrique».

Dans certains cas, la taille des granules du composé inorganique ignifugeant peut avoir une influence sur l'étanchéité du textile selon l'invention. En effet, si la taille des granules est trop importante, ces granules peuvent ne pas être noyées dans la matière de la couche d'enduction à base de silicone et au contraire remonter à la surface. Ce phénomène peut créer des faiblesses dans la couche d'enduction et diminuer l'étanchéité du textile.

Ainsi, le composé inorganique ignifugeant présente une taille de granules D50 inférieure à 50 µm, de manière avantageuse, inférieure à 20 µm.

Selon l'invention, ladite couche d'enduction comprend entre 5% et 60 % en poids d'au moins un composé inorganique ignifugeant

L'homme du métier est capable de déterminer le PCS d'un textile. Ainsi, l'homme du métier peut facilement adapter la quantité de composé ignifugeant à intégrer dans chaque couche d'enduction en fonction de la nature du composé inorganique ignifugeant sélectionné. Le PCS est exprimé en MJ/kg, il peut être calculé en faisant la moyenne pondérée des PCS des éléments constituant un composite.

A titre d'exemple pour un tissu de verre de 250g/m² enduit avec un silicone de 135g/m² à 9% de charges inorganique, le calcul se décompose comme suit :
- PCS verre : 0MJ/kg
- PCS silicone 20MJ/kg
- PCS charges inorganiques 0MJ/kg
- PCS du composite = (250*0+135*0.91*20+135*0.09*0) / (250+135) = 6.4MJ/kg

Conformément à l'invention, la face envers est apte à être collée sur un support. Le support peut être de nature très variée, et notamment en métal tel que l'aluminium pour des charpentes métalliques et/ou en bois. La face envers est généralement collée sur une structure présentant des zones ajourées, l'étanchéité interdisant le passage de liquide, notamment de l'eau, alors que l'imper-respirabilité permet aux gaz, notamment la vapeur d'eau de s'échapper de ses zones ajourées. Le support peut également être une couche de matériau de construction ou d'isolation, tel que de la laine de roche ou de la laine de verre.

Pour réaliser des textiles de grandes dimensions, il est possible d'assembler des lés du textile en parallèle. Dans ce cas, la face endroit de la lisière d'un premier lé est apte à être collée sur la lisière de la face envers d'un second lé pour former des joints chevauchants.

Pour coller la face revêtue de la couche d'enduction, on peut utiliser par exemple des colles classiques mono-composant ou bi-composant, à base de silicone ou MS Polymère, et par exemple du type Stamcoll Safe commercialisée par la société Serge Ferrari AG. Mais tout type de colle peut être utilisé à condition que l'étanchéité et l'imper-respirabilité ne soient pas détériorées. De manière avantageuse, pour les applications de surfaçage, c'est-à-dire d'application du textile par sa face envers sur une couche d'un matériau d'isolation ou analogue, la colle utilisée est une colle ré activable.

La présente invention concerne également un procédé de fabrication du textile enduit tel que décrit ci-dessus.

La nappe peut être revêtue d'une couche d'enduction à base de silicone selon toute technique connue de l'homme du métier.

De manière avantageuse, l'étape d'enduction peut être réalisée en phase liquide de type base aqueuse, en phase plus visqueuse type LSR, RTV, ou de manière encore plus avantageuse en phase solvant. La réalisation de l'étape d'enduction en phase solvant permet de contrôler la viscosité et de contrôler le taux de pénétration de la couche d'enduction dans la nappe tout en assurant une enduction des tranches.

Les textiles selon l'invention peuvent être utilisés comme revêtement d'un mur d'un bâtiment.

En pratique, la face envers est positionnée en regard du mur à revêtir. Le textile est solidarisé sur le mur par tout moyen. Comme déjà évoqué, la face envers peut être apprêtée avec de la colle et fixée au mur par ce moyen.

Plusieurs lés de textile peuvent être assemblés. Ainsi, il est possible de revêtir un immeuble de plus de 11 m de manière étanche avec le textile enduit en répondant aux futures législations.

### DESCRIPTION SOMMAIRE DES FIGURES

La manière de réaliser l'invention, ainsi que les avantages qui en découlent, ressortiront bien de la description des modes de réalisation qui suivent, à l'appui des figures annexées dans lesquelles :
- la figure 1 est une coupe transversale d'un mode de réalisation d'un textile selon l'invention,
- la figure 2 est une coupe transversale de deux textiles de la figure assemblés entre eux ;
- la figure 3 est une vue en coupe transversale du textile de la figure 1 associé avec un support ;
- la figure 4 est une coupe transversale d'un autre mode de réalisation d'un textile selon l'invention,

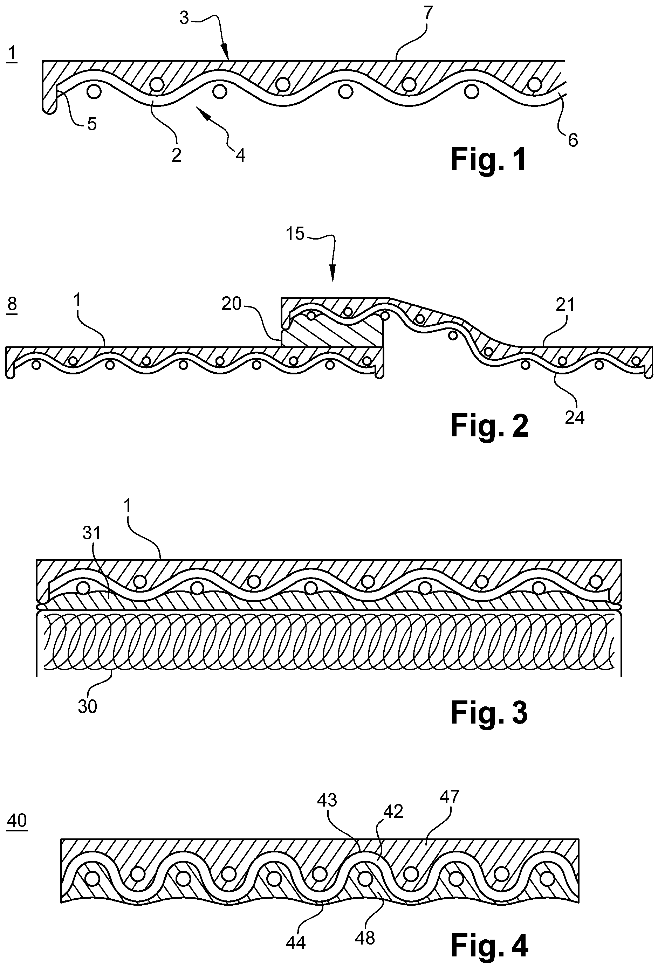

Bien entendu, les dimensions et les proportions des éléments illustrés aux figures 1 et 2 ont pu être exagérées par rapport à la réalité, et n'ont été données que dans le but de faciliter la compréhension de l'invention.

### DESCRIPTION DETAILLEE DES FIGURES

Le mode de réalisation du textile enduit **1** illustré à la figure 1 comporte une nappe **2** à base de fibres de verre tissée. La nappe **2** présente une face endroit **3,** une face envers **4** et des tranches **5, 6.** La nappe **2** est recouverte avec une couche d'enduction **7** à base de silicone au niveau de la face endroit **3** et des tranches **5, 6.**

Dans cette configuration, l'épaisseur de la couche d'enduction **7** est suffisante pour assurer une bonne protection du textile enduit **1** en cas d'intempérie telle que de fortes pluies au niveau des tranches **5** et **6** notamment, et est suffisante pour garantir la résistance mécanique et la résistance au feu tout en conférant un caractère imper-respirant au textile enduit **1.**

La face envers **4** de la nappe **2** n'est pas enduite, ce qui permet, comme déjà indiqué, de pouvoir utiliser toutes techniques en vue de solidariser le textile enduit **1** avec une façade d'un bâtiment.

La figure **2** illustre un assemblage **8** de deux lés selon le mode de réalisation illustré à la figure 1. En pratique, un premier textile **1** est positionné en regard d'un second textile **21** de sorte à avoir une zone de recouvrement **15.** Les deux lés **1** et **21** sont alors solidarisés au niveau de cette zone de recouvrement, par interposition d'un trait de colle **20,** qui vient au contact de la couche d'enduction **7** du premier lé **1,** et la face envers **24** du second lé **21.** L'assemblage **8** est ainsi étanche, notamment au niveau de la tranche du lé destiné à être exposé à l'extérieur, ou plus généralement à une atmosphère contenant de l'humidité liquide, et les propriétés physiques de cet assemblage sont sensiblement similaires à celles des textiles enduits **1** et **21.**

La figure 3 illustre l'association d'une feuille textile **1** conforme à l'invention avec un support **30,** qui peut être une couche d'un matériau isolant, tel que de la laine de roche ou de verre ; par l'intermédiaire d'une couche **31** avantageusement réactivable à chaud, présente sur tout ou partie des surfaces en regard.

Dans une variante de réalisation illustrée à la figure 4, le textile **40** inclut une âme tissée **42** équivalente à celle de la figure 1. Cette âme est recouverte sur sa face endroit **43** d'une première couche d'enduction **47,** et sur sa face envers **44,** d'une seconde couche d'enduction **48.**

### Exemples :

Des textiles enduits ont été réalisés à partir de tissus à base de fibres de verre tissées et de différentes compositions d'enduction. Plus précisément, le tissu est obtenu avec des fils de verre retordus à 40 tr/m dans le sens Z ; de 680 dtex en chaine et en trame. Ces fils sont tissés à proportion de 16 et 16,5 fils par centimètre, dans les sens respectivement chaine et trame, selon une armure satin de 4.

Les caractéristiques des différents textiles sont résumées dans le tableau 1.

**Tableau 1**

| N° d'échantillon | Couche d'enduction | Composé Inorganique | Taille des granules du composé inorganique (D50) | Quantité de composé inorganique (% Sec) |
|---|---|---|---|---|
| 1 (invention) | Silicone | Trihydrate d'aluminium | 2 µm | 45 |
| 2 (invention) | Silicone | Trihydrate d'aluminium | 16 µm | 55 |
| 3 (contre-exemple) | Silicone | aucun | - | - |
| 4 (contre-exemple) | Acrylate | Trioxyde d'antimoine | 2 µm | 25 |

Ces textiles enduits ont été soumis à un test d'étanchéité dynamique avant et après vieillissement, un test d'étanchéité statique, un test de respirabilité, un test de rupture du collage, un test de rupture après pliure (test connu sous le nom de « crease fold »). Le PCS de chaque textile a également été mesuré. Les résultats sont résumés dans le tableau 2.

L'étanchéité dynamique à l'eau a été mesurée selon la norme EN 20811, un textile est suffisamment étanche si le résultat du test de la colonne d'eau est supérieur à 100 cm. Le test de la colonne d'eau dynamique permet de rendre compte de l'étanchéité d'un produit soumis à une augmentation graduelle de la pression évoluant de 60 cm de colonne d'eau par min, notés 60cmWS/min. La face testée est l'endroit de la membrane et concerne une surface de 100 cm2. Le test possède une valeur cible, définie par l'utilisateur, qui l'interrompt dès qu'elle est atteinte. Cependant, le test peut être arrêté prématurément au bout de trois gouttes visibles sur l'envers de la membrane. La valeur de la colonne correspondante à la troisième apparition est relevée, en cm.

Les échantillons subissent un vieillissement en les plaçant dans un four à 120°C pendant une semaine. Ceux-ci sont ensuite testés selon le protocole précédent de colonne d'eau dynamique.

Contrairement à la mesure de l'étanchéité dynamique dont la pression varie selon une rampe, la mesure de l'étanchéité statique (test W1) met en jeu un procédé isobare, donné par 20 mbar de colonne d'eau. Le test dure deux heures. Le dispositif se constitue d'un réservoir d'eau, colorée pour la visibilité. La membrane est posée au-dessus. Un filtre buvard couvre le dessus pour témoigner du passage de l'eau à travers la membrane et trahit ainsi la non-perméabilité du produit. Une plaque de plexiglas est ensuite déposée pour éviter les phénomènes d'explosion due à la pression. Le résultat du test est binaire, soit le produit atteint la classification W1, soit il ne remplit pas les conditions.

La respirabilité a été mesurée selon la norme EN ISO 12572-C/DIN 1931. La respirabilité s'apprécie par rapport à un paramètre de résistance à la diffusion de vapeur (Sd), qui correspond à l'épaisseur de la couche d'air équivalente à la diffusion (en mètres). Ce paramètre se calcule à partir du taux de transmission de la vapeur d'eau (WVRT pour Water Vapour Rate Transmission) exprimé en g/m²/jour, et dépend de l'épaisseur du matériau. Un textile est considéré comme suffisamment respirant si le paramètre Sd est inférieur à 0,2 m.

Elle est évaluée par gravimétrie, dans des conditions humides. La membrane est installée au-dessus d'une coupelle remplie d'eau dont la quantité est normée puis est placée en enceinte climatique précise. La mesure est disponible au bout de quelques heures, le temps variant en fonction de l'épaisseur du produit.

La rupture du collage a été mesurée selon la norme EN 12311-1. Les assemblages collés sont placés dans un four à 200°C pendant 8 heures. Il s'agit d'un joint à simple recouvrement avec le dispositif de colle adapté à l'application. Les échantillons sont confectionnés en configuration cisaillement-traction. Ils sont découpés avec une largeur de 5 cm et une longueur de 20 cm et testés sur un banc de traction normé. La force de rupture du collage est alors mesurée en N/5cm. Le collage est considéré comme satisfaisant si la rupture intervient au-dessus de 200N/5cm.

La rupture après Crease Fold a été mesurée selon la norme ASTM D4851. Des membranes en textile de verre (5 cm de largeur et 20 cm de longueur) sont préalablement pliées selon des conditions spécifiques : la membrane est rabattue sur elle-même avant d'être soumise à une pression répétée dix fois sur sa surface au moyen d'un rouleau, toujours dans la même direction. La face envers contre la face envers est testée, de même que la face endroit contre la face endroit.

Le PCS est mesurée selon la norme EN ISO 1716 avec la méthode dite « bombe calorimétrique». La valeur de PCS (pouvoir calorifique spécifique) détermine le rôle que peut jouer un produit dans un incendie. Elle est mesurée au moyen d'une bombe calorimétrique. Le matériau est réduit en quantité infime et placé dans un creuset avec un agent combustible. Le tout est placé dans la bombe remplie de dioxygène pur. Elle sera fermée et installée dans un bain thermostaté dont la température est connue et fixée. La bombe est amorcée et le principe de mesure réside en la différence de température entre l'eau du bain avant réaction et après, due à l'énergie de combustion. La valeur finale du PCS est fournie en MJ/kg. Comme déjà mentionné, le PCS recherché est un PCS inférieur ou égal à 3MJ/kg.

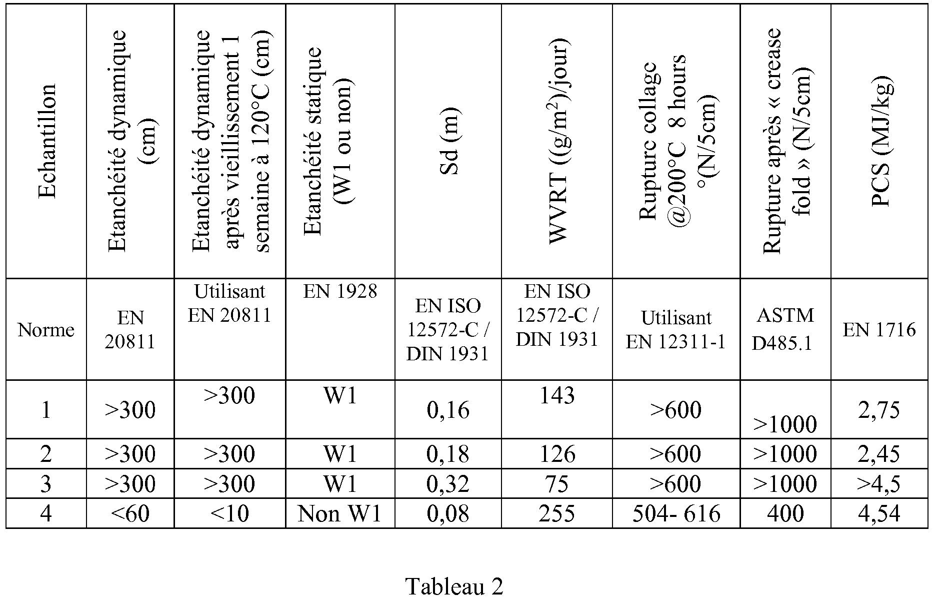

Les différents tests montrent que les membranes réalisées avec un textile selon l'invention (échantillons 1 et 2) présentent un PCS inférieur à 3 MJ/kg tout en présentant des propriétés d'étanchéité, d'imper-respirabilité et mécanique permettant l'utilisation de celles-ci comme revêtement d'un mur d'un bâtiment tandis que les membranes réalisées avec un textile avec une couche d'enduction ne comprenant pas de composé inorganique ignifugeant (échantillon 3) ou à base d'acrylate (échantillon 4) ne regroupent pas l'ensemble des propriétés recherchées

## Revendications

1. Textile enduit imper-respirant, constitué d'une nappe à base de fibres de verre présentant une face envers, une face endroit et au moins une tranche, ladite face endroit étant recouverte d'une couche d'enduction à base de silicone et ladite face envers étant apte à être collée sur un support, la couche d'enduction comprenant entre 5% et 60 % en poids d'au moins un composé inorganique ignifugeant, ledit composé inorganique ignifugeant étant choisi dans le groupe comprenant le triohydrate d'aluminium, l'hydroxyde de magnésium, les silices, le trioxyde d'antimoine, le carbonate de calcium et les pigments inorganiques, et la couche d'enduction ayant une épaisseur comprise entre 5 et 150 µm,
**caractérisé en ce que**
le textile a une respirabilité appréciée par rapport au paramètre de résistance à la diffusion de vapeur (Sd), mesurée selon la norme EN ISO 12572-C/DIN 1931, telle que le paramètre Sd est inférieur à 0,2 m,
la couche d'enduction comprenant au moins un composé inorganique ignifugeant en une quantité suffisante pour que le textile enduit présente un pouvoir calorifique supérieur inférieur ou égal à 3 MJ/kg,
le composé inorganique ignifugeant présente une taille de granule D50 inférieure à 50 µm et supérieure à 2 µm,
la nappe présente un poids compris entre 20 et 500 g/m².

2. Textile enduit selon la revendication 1, **caractérisé en ce que** la nappe présente une épaisseur comprise entre 20 µm et 1 mm.

3. Textile selon l'une des revendications précédentes, **caractérisé en ce que** la couche d'enduction recouvre la tranche de la nappe à base de fibres de verre.

4. Textile selon l'une des revendications précédentes, **caractérisé en ce que** la face envers de la nappe à base de fibres de verre et recouverte d'une couche d'enduction.

5. Textile selon l'une des revendications précédentes, **caractérisé en ce que**, lorsque la face envers de la nappe à base de fibres de verre est recouverte d'une couche d'enduction, les couches d'enduction recouvrant les faces endroit et envers sont à base du même matériau.

6. Textile selon la revendication 4, **caractérisé en ce que** la couche d'enduction recouvrant la face envers est d'épaisseur inférieure à l'épaisseur de la couche d'enduction recouvrant la face endroit.

7. Textile selon l'une des revendications précédentes, **caractérisé en ce que** le silicone est choisi dans le groupe comprenant les polydiméthylsiloxanes, les polydiphenylsiloxanes, les oligosiloxanes, les polyaminosiloxanes, les polyvinylsiloxanes et leurs copolymères.

8. Procédé de fabrication d'un textile selon l'une des revendications 1 à 6 comprenant au moins les étapes suivantes :
- obtention d'une nappe tissée ou non tissée à base de fibre de verre, la nappe présentant un poids compris entre 20 et 500 g/m2,
- enduction de ladite face endroit avec une composition à base de silicone comprenant entre 5% et 60 % en poids d'au moins un composé inorganique ignifugeant, la couche d'enduction ayant une épaisseur comprise entre 5 et 150 µm et comprenant au moins un composé inorganique ignifugeant en une quantité suffisante pour que le textile enduit présente un pouvoir calorifique supérieur inférieur ou égal à 3 MJ/kg, le composé inorganique ignifugeant présentant une taille de granule D50 inférieure à 50 µm et supérieure à 2 µm, et ledit composé inorganique ignifugeant étant choisi dans le groupe comprenant le triohydrate d'aluminium, l'hydroxyde de magnésium, les silices, le trioxyde d'antimoine, le carbonate de calcium et les pigments inorganiques,
le textile ayant une respirabilité appréciée par rapport au paramètre de résistance à la diffusion de vapeur (Sd), mesurée selon la norme EN ISO 12572-C/DIN 1931, telle que le paramètre Sd est inférieur à 0,2 m.

9. Procédé selon la revendication 8, **caractérisé en ce que** l'étape d'enduction est réalisée en phase liquide de type base aqueuse, ou en phase plus visqueuse type LSR, RTV, et de préférence en phase solvant.

10. Utilisation du textile selon l'une des revendications 1 à 6 comme revêtement d'une structure d'un bâtiment.

## Patentansprüche

1. Beschichtetes, atmungsaktives, wasserdichtes Textil, bestehend aus einer Lage auf Glasfaserbasis, die eine linke Seite, eine rechte Seite und mindestens eine Kante aufweist, wobei die rechte Seite mit einer Beschichtung auf Silikonbasis überzogen ist und die linke Seite auf einen Träger geklebt werden kann, die Beschichtung zwischen 5 und 60 Gew.-% mindestens einer flammhemmenden anorganischen Verbindung enthält, die flammhemmende anorganische Verbindung aus der Gruppe ausgewählt ist, die aus Aluminiumtrihydrat, Magnesiumhydroxid, Kieselsäuren, Antimontrioxid, Calciumcarbonat und anorganischen Pigmenten besteht, und die Beschichtung zwischen 5 und 150 µm dick ist, **dadurch gekennzeichnet, dass** das Textil eine Atmungsaktivität aufweist, die anhand des Parameters für den Dampfdiffusionswiderstand (Sd), gemessen nach EN ISO 12572-C/DIN 1931, beurteilt wird, so dass der Sd-Parameter kleiner als 0,2 m ist, die Beschichtung mindestens eine flammhemmende anorganische Verbindung in einer Menge umfasst, die ausreicht, damit das beschichtete Textil einen oberen Heizwert von weniger als oder gleich 3 MJ/kg hat, die flammhemmende anorganische Verbindung eine Partikelgröße D50 von weniger als 50 µm und mehr als 2 µm aufweist, und die Lage zwischen 20 und 500 g/m² wiegt.

2. Beschichtetes Textil nach Anspruch 1, **dadurch gekennzeichnet, dass** die Lage zwischen 20 µm und 1 mm dick ist.

3. Textil nach einem der vorhergehenden Ansprüche, **dadurch gekennzeichnet, dass** die Beschichtung die Kante der Glasfaserlage bedeckt.

4. Textil nach einem der vorhergehenden Ansprüche, **dadurch gekennzeichnet, dass** die linke Seite der Glasfaserlage beschichtet ist.

5. Textil nach einem der vorhergehenden Ansprüche, **dadurch gekennzeichnet, dass** die Beschichtungen auf der rechten und der linken Seite aus demselben Material bestehen, wenn die linke Seite der Glasfaserlage beschichtet ist.

6. Textil nach Anspruch 4, **dadurch gekennzeichnet, dass** die Beschichtung auf der linken Seite dünner ist als die Beschichtung auf der rechten Seite.

7. Textil nach einem der vorhergehenden Ansprüche, **dadurch gekennzeichnet, dass** das Silikon aus der Gruppe ausgewählt ist, die Polydimethylsiloxane, Polydiphenylsiloxane, Oligosiloxane, Polyaminosiloxane, Polyvinylsiloxane und deren Copolymere umfasst.

8. Verfahren zur Herstellung eines Textils nach einem der Ansprüche 1 bis 6, das mindestens folgende Schritte umfasst:
- Erhalt eines Glasfasergewebes oder eines Glasfaservlieses, wobei die Lage ein Gewicht zwischen 20 und 500 g/m² aufweist,
- Beschichten der rechten Seite mit einer Zusammensetzung auf Silikonbasis, die zwischen 5 und 60 Gew.-% einer flammhemmenden anorganischen Verbindung enthält, wobei die Beschichtung eine Dicke zwischen 5 und 150 µm aufweist und mindestens eine flammhemmende anorganische Verbindung in einer Menge enthält, die ausreicht, damit das beschichtete Textil einen oberen Heizwert von weniger als oder gleich 3 MJ/kg hat, die flammhemmende anorganische Verbindung eine Partikelgröße D50 von weniger als 50 µm und mehr als 2 µm aufweist und die flammhemmende anorganische Verbindung aus der Gruppe ausgewählt ist, die aus Aluminiumtrihydrat, Magnesiumhydroxid, Kieselsäuren, Antimontrioxid, Calciumcarbonat und anorganischen Pigmenten besteht, und das Textil eine Atmungsaktivität hat, die anhand des Parameters des Dampfdiffusionswiderstands (Sd), gemessen gemäß EN ISO 12572-C/DIN 1931, beurteilt wird, so dass der Parameter Sd kleiner als 0,2 m ist.

9. Verfahren nach Anspruch 8, **dadurch gekennzeichnet, dass** der Beschichtungsschritt in einer flüssigen Phase vom Typ Wasserbasis oder in einer viskosen Phase vom Typ LSR, RTV und vorzugsweise in einer Lösungsmittelphase durchgeführt wird.

10. Verwendung des Textils nach einem der Ansprüche 1 bis 6 als Verkleidung einer Gebäudestruktur.

## Claims

1. A waterproof breathable coated textile containing a web based on glass fibres having a back face, a front face and at least one edge, said front face being covered with a coating layer based on silicone and said back face being capable of being bonded to a support, the coating layer comprising between 5% and 60% by weight of at least one inorganic flame retardant compound, said inorganic flame retardant compound being selected from the group comprising aluminium triohydrate, magnesium hydroxide, silicas, antimony trioxide, calcium carbonate and inorganic pigments, and the coating layer having a thickness of between 5 and 150 µm, **characterized in that** the textile has an assessed breathability in relation to the parameter of resistance to vapour diffusion (Sd), measured in accordance with EN ISO 12572-C/DIN 1931, such that the parameter Sd is less than 0.2 m, the coating layer comprising at least one flame retardant inorganic compound in a quantity sufficient for the coated textile to have a higher calorific value of less than or equal to 3 MJ/kg, the inorganic flame retardant compound has a D50 granule size of less than 50 µm and more than 2 µm, the sheet has a weight between 20 and 500 g/m2.

2. The coated textile as claimed in claim 1, **characterized in that** the web has a thickness between 20 µm and 1 mm.

3. The textile as claimed in one of the preceding claims, **characterized in that** the coating layer covers the edge of the web based on glass fibres.

4. The textile as claimed in one of the preceding claims, **characterized in that** the back face of the web based on glass fibres is covered with a coating layer.

5. The textile as claimed in one of the preceding claims, **characterized in that** when the back face of the web based on glass fibres is covered with a coating layer, the coating layers covering the front and back faces are based on the same material.

6. The textile as claimed in claim 4, **characterized in that** the thickness of the coating layer covering the back face is less than the thickness of the coating layer covering the front face.

7. The textile as claimed in one of the preceding claims, **characterized in that** the silicone is selected from the group comprising polydimethylsiloxanes, polydiphenylsiloxanes, oligosiloxanes, polyaminosiloxanes, polyvinylsiloxanes and their copolymers.

8. A process for the production of a textile as claimed in one of claims 1 to 6, comprising at least the following steps:
- obtaining a woven or nonwoven web based on glass fibres, the web having a weight between 20 and 500 g/m2,
- coating said front face with a silicone-based composition comprising between 5% and 60% by weight of at least one inorganic flame retardant compound, the coating layer having a thickness of between 5 and 150 µm, and containing at least one flame retardant inorganic compound in a quantity sufficient for the coated textile to have a higher calorific value of less than or equal to 3 MJ/kg, the inorganic flame retardant compound having a D50 granule size of less than 50 µm and more than 2 µm, and said inorganic flame retardant compound being selected from the group comprising aluminium triohydrate, magnesium hydroxide, silicas, antimony trioxide, calcium carbonate and inorganic pigments, the textile having an assessed breathability in relation to the parameter of resistance to vapour diffusion (Sd), measured in accordance with EN ISO 12572-C/DIN 1931, such that the parameter Sd is less than 0.2 m

9. The process as claimed in claim 8, **characterized in that** the coating step is carried out in the aqueous base type liquid phase or in a more viscous LSR, RTV type phase, and preferably in the solvent phase.

10. Use of the textile as claimed in one of claims 1 to 6, as a covering for a structure of a building.
